# EUROPÄISCHE PATENTSCHRIFT

(11) **EP 1 599 279 B1**
(45) Veröffentlichungstag und Bekanntmachung des Hinweises auf die Patenterteilung: **13.09.2006**
(21) Anmeldenummer: 04701302.4
(22) Anmeldetag: 10.01.2004
(51) Int. Cl.: B01F 7/00, B01F 7/18, B01F 15/00, B01J 19/18, B01F 15/06

(54) **SEGMENTIERTER RÜHRREAKTOR UND VERFAHREN**
SEGMENTED AGITATOR REACTOR AND METHOD
REACTEUR À AGITATEUR SEGMENTE ET PROCÉDÉ

(30) Priorität: 06.03.2003 DE 10310091
(43) Veröffentlichungstag der Anmeldung: 30.11.2005
(73) Patentinhaber: Novolen Technology Holdings C.V., 2596 JJ Den Haag (NL)
(72) Erfinder: GEBHART, Hermann, 67459 Böhl-Iggelheim (DE); HUBER, Karl, 67227 Frankenthal (DE); BOSS, Christiane, 68775 Ketsch (DE); LANGHAUSER, Franz, 67152 Ruppertsberg (DE)
(74) Vertreter: Zellentin, Wiger
(86) Internationale Anmeldenummer: PCT/EP2004/000116
(87) Internationale Veröffentlichungsnummer: WO 2004/078329

(56) Entgegenhaltungen:
- DE-A- 2 803 407
- DE-C- 281 168
- US-A- 2 569 459
- US-A- 4 460 278

## Beschreibung

Die vorliegende Erfindung betrifft eine Vorrichtung zur Durchführung von chemischen und/oder physikalischen Prozessen, sowie ein Verfahren zur Herstellung von Polyolefinen.

Bekannte Reaktoren für die vorliegenden Zwecke sind grundsätzlich Strömungsrohre oder Rührkessel.

Aus der US-A-2,569,459 ist eine Vorrichtung zum Homogenisieren von Glas bekannt. Diese besteht aus einem senkrechten Rohr mit im Inneren an einer Welle angeordneten Rührflügeln. Die Flügel sind gegensinnig gekrümmt und weisen eine von der Welle zum Innenrand des Rohres konstante Blattbreite auf.

Aus der US-A 4,460,278 ist femer ein Rohrreaktor für die Zwecke von Polymerisationsreaktionen bekannt, der mehrere nach oben und nach unten gebogene Rührflügelpaare mit dazwischen liegendem Scheiben aufweist. Zweck dieser Vorrichtung ist die Erzeugung einer Kreisströmung um die Enden von Blattpaaren.

Ideale Strömungsrohre weisen den Vorteil auf, dass sämtliche transportierten Teilchen der gleichen Verweilzeit beim Durchlauf unterliegen, im Rührkessel hingegen nicht, hier werden die Teilchen jedoch wesentlich besser gemischt. Will man daher einen hohen Mischungsgrad mit gleicher Verweilzeit aller Teilchen erreichen, so werden Rührkesselkaskaden eingesetzt. Solche Rührkesselkaskaden sind jedoch nur in separaten Behältnissen zu verwirklichen, was konstruktiven Aufwand mit sich bringt. Beide Reaktorarten weisen daher nur eingeschränkte Möglichkeiten der jeweiligen Einflussnahme auf die in ihnen behandelten fluiden Substanzteilchen oder Substanzteilchenmischungen in fester und/oder flüssiger Form auf.

Die vorliegende Erfindung hat sich daher die Aufgabe gestellt, einen Reaktor für physikalische und/oder chemische Prozesse zu schaffen, der die vorteilhaften Charakteristika von Strömungsrohr und Rührkessel vereinigt.

Diese Aufgabe gelingt erfindungsgemäß mit einer Vorrichtung zur Durchführung von chemischen und physikalischen Prozessen gemäß Anspruch 1 bei welchen fließfähige Substanzen miteinander vermischt werden, bestehend aus einem vorzugsweise (senkrechten) zylindrischen Behälter mit Einlässen und Auslässen, sowie einer zentralen Welle und an dieser angeordneten, sich bis nahe zur Wandung erstreckenden, radialen Rührflügeln. Die Rührflügel sind in Umfangsrichtung gesehen gekrümmt. ausgebildet und als Rührorgane paarweise (übereinander) zu Gruppen zusammengefasst, wobei die Flügel des einen Organs der Gruppe radial konkav und die Flügel des benachbarten Organs radial konvex gekrümmt sind.

Die Besonderheit einer solchen Lösung besteht in folgendem: Die den rohrFörmigen Reaktor durchwandernden festen oder flüssigen Partikel oder Gase werden von den in Drehrichtung gesehen konkaven Rührflügeln vom vertikalen Mittenbereich nach außen zur Rohrwandung verdrängt, wohingegen die darüber- oder darunterliegenden gegensinnig geformten Flügel der jeweiligen baulichen Gruppe diese wieder nach innen fördern. Gleichzeitig entstehen an den Kanten der Flügel umgelenkte Strömungsfäden, so dass insgesamt die Teilchen die Bewegung einer geschlossenen Spirale durchlaufen. Wird ein solcher Reaktor nicht statisch betrieben, sondern ein vertikaler Durchsatz, z.B. durch Pumpen oder unter Schwerkraft erzeugt, so ergibt sich neben einer sehr guten Vermischung auch der Vorteil einer ausgesprochen homogenen Verweilzeitverteilung. Damit verbunden ist natürlich auch eine gegenüber herkömmlichen Reaktoren wesentlich verringerte Baugröße.

Ein solcher erfindungsgemäßer Reaktor kann insbesondere zur Herstellung homogener Mischungen, zur Durchführung von Reaktionen zwischen festen und/oder flüssigen und/oder gasförmigen Substanzen, zum Erwärmen oder Kühlen, zum Beschichten von Teilchen und dergleichen verwendet werden. Sein einfacher Aufbau erlaubt selbstverständlich auch Prozesse unter hohem Druck oder hoher Temperatur.

Ein weiterer ganz besonderer Vorteil liegt in der Möglichkeit einer sehr genauen Prozessbeeinflussung.

Da, wie oben gesagt, die Verweilzeit der Teilchen beim Durchgang durch den rohrförmigen Reaktor sehr homogen ist, können auch über die Höhe unterschiedliche Maßnahmen, wie z. B. bereichsweise Kühlung, Zugabe oder Abführung von Stoffen erfolgen, beispielsweise kann mit Gasen eine Querspülung erfolgen, wenn Feststoffteilchen im Reaktor behandelt werden, oder aber es können mehrere Reaktionsschritte mit unterschiedlichen Reaktionskomponenten vorgenommen werden.

Eine weitere Verbesserung, d.h. insbesondere schnellere Vermischung und engere Verweilzeitverteilung kann bei einer Verjüngung der Flügel zu ihren freien Enden hin, z. B. durch eine trapezförmige Form der Flügel erreicht werden, was die Zunahme der Umfangsgeschwindigkeit in radialer Richtung berücksichtigt.

Ebenso kann die Querförderung durch eine spiralförmige Krümmung der Flügel verbessert werden, vorzugsweise in Form einer logarithmischen oder archimedischen Spirale.

Darüber hinaus können die Flügel auch unter einem Winkel zur Längsachse der diese tragenden Welle angestellt sein, um eine vertikale Förderung zu erreichen. Beispielsweise können die Flügel des Rührorgans gegensinnig derart angestellt sein, dass sie die Substanz in ihrem Wirkungsbereich aufeinander zubewegen, um eine Vermischung zu intensivieren.

Eine weitere Möglichkeit der Einflussnahme auf die Komponenten des Reaktorinhalts kann erhalten werden, wenn zwischen den einzelnen Rührorganen, d. h. jeweils zwischen den Rührerpaaren Sperrscheiben angeordnet sind, die beim Durchlauf Substanz nach außen zur Rohrwandung führen bzw. Turbulenz glätten.

In besonders vorteilhafter Weise lässt sich mit einem solchen Reaktor die Herstellung von Polyolefinen verwirklichen.

Dabei wird von dem Effekt Gebrauch gemacht, dass die Wirkung der Rührflügelgruppen einem verbesserten Rührkessel gleichkommt, es fehlen Totzonen und es liegt eine sehr hohe Relativgeschwindigkeit der Reaktionskomponenten Monomeres, Polymeres und Katalysator vor, so dass alle die erstere(n) Gruppe(n) verlassenden Produkte, gleich weit reagiert haben, insbesondere ergibt sich dabei auch eine gegenüber dem Stand der Technik homogenere Temperaturverteilung.

Gängige Verfahren zur Herstellung von Polyolefinen, insbesondere Polypropylen sind in der zugänglichen Literatur ausführlich beschrieben.
Wirbelschichtreaktoren, z. B.:
US 4,003,712 der Union Carbide Corp.,
EP 1080782 der Sumitomo Chem. Corp. LTD
Lösungsprozesse, z. B.:
WO 97/36942 der Dow chem. Corp.
Zirkulierende Multi-Zonen-Reaktoren, z. B.:
WO 97/04015 der Montell Technology CO BV (Basell)
Gerührte Gasphasenreaktoren, z. B.:
US 4,921,919 der Standard Oil CO
US 3,639,377 der BASF AG

Mischorgane für Reaktoren sind z. B. in DE 1,218,265 oder WO99/29406 beschrieben.

Sämtliche aufgeführten Verfahren haben zum Ziel, die Reaktionswärme schnell und gleichmäßig abzuführen. In Wirbelschichtreaktoren wird dies durch vergleichsweise große Gasmengen und hohe Relativgeschwindigkeit der Partikel zueinander bewerkstelligt. Nachteil dieser Verfahren ist wie bereits erwähnt die hohe Gasmenge. Üblicherweise wird hierzu dem Reaktionsgas ein signifikanter Anteil von Trägergas zugemischt, welches anschließend wieder zurückgewonnen werden muss. Außerdem sind die Vorrichtungen zur Erzeugung der notwendigen hohen Gasgeschwindigkeiten relativ teuer und die Reaktoren neigen zur Bildung von Polymerbelägen.

Lösungsprozesse haben den Nachteil, dass das verwendete Lösungsmittel aus dem Polymeren entfernt werden und zurückgewonnen werden muss. In sämtlichen beschriebenen Prozessen wird das Polymer signifikant rückvermischt so dass diese durch einen kontinuierlich betriebenen Rührkessel beschrieben werden können. Solcherart rückvermischte Prozesse erlauben nur eingeschränkte Kontrolle der Polymerzusammensetzung über die Verweilzeit eines Polymerteilchens in der Reaktionszone. Weiterhin wird bei solchen Prozessen ein nicht unerheblicher Teil der Polymerteilchen zu einem frühen Zeitpunkt der Reaktion bereits wieder aus dem Reaktor entfernt, was zu einer geringeren Katalysatorausnutzung führt.

Diese Aufgabe wird durch ein Verfahren gemäß Anspruch 8 gelöst.

Ein weiterer wesentlicher Aspekt ist die Menge an Übergangsmaterial, die in einem Reaktor beim Wechsel von einem Produkt A nach B anfällt. Diese ist im Wesentlichen durch das Verweilzeitverhalten des Reaktorsystems bestimmt.

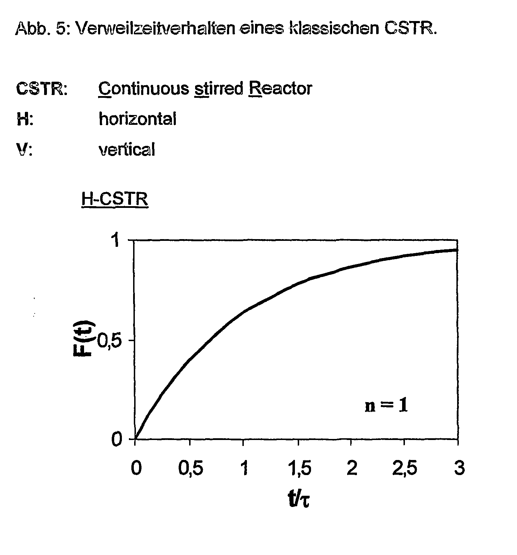

Die Abb. 5 zeigt das Verweilzeitverhalten eines klassischen CSTR.

Wie in Abb. 5 zu sehen ist, benötigt man für einen Produktübergang einer Materialeigenschaft F in einem CSTR ca. 3 Verweilzeiten. Unterschiedlich gestaltet sich dies bei Reaktoren, die zumindest teilweise das Verhältnis einer Kaskade aufweisen wie z. B. loop Reaktoren oder liegende (vertikale) Reaktoren.

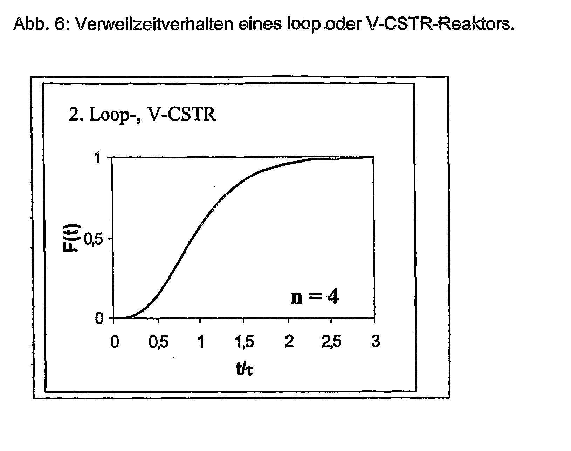

Die Abb. 6 zeigt das Verweilzeitverhalten eines loop oder V-CSTR-Reaktors.

Wie in Abb. 6 zu sehen, kann der Produktübergang hinsichtlich einer Materialeigenschaft F bei loop bzw. V-CSTR Reaktoren theoretisch mit einer Kaskade von n = 4 CSTR beschrieben werden. Nachteilig ist, dass weiterhin etwa 2 Verweitzeiten über die gesamte Kaskade für einen Produktübergang benötigt werden.

Der erfindungsgemäße Reaktor genügt folgenden Anforderungen:
- Hohe Relativgeschwindigkeit der Polymerpartikel zueinander.
- Hohe Relativgeschwindigkeit der Polymerpartikel quer zur Reaktorachse
- Geschwindigkeit der Polymerpartikel in Reaktorachse proportional zur Volumenexpansion der Polymerpartikel während der Reaktion mit minimaler Rückvermischung.

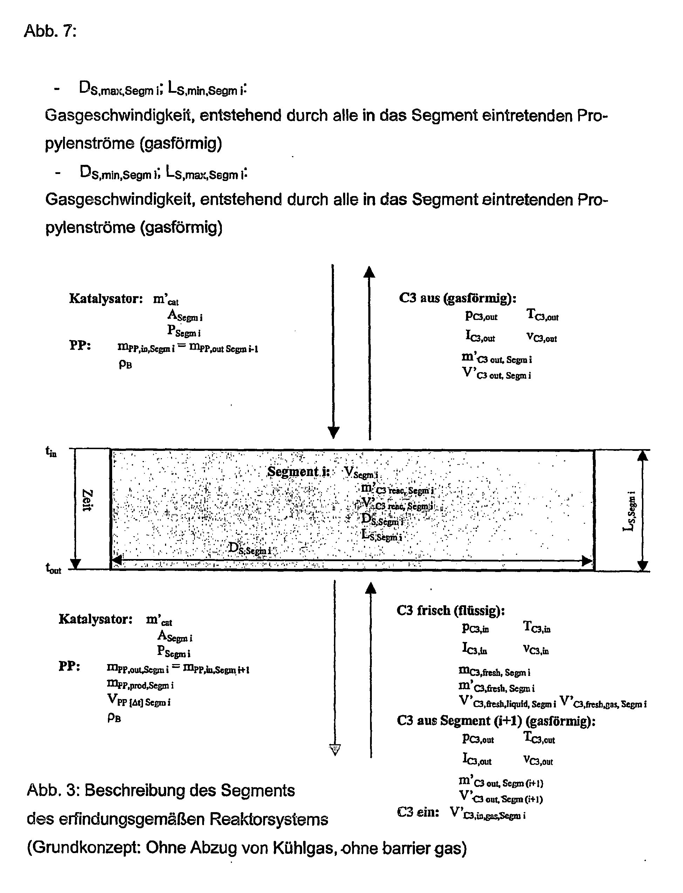

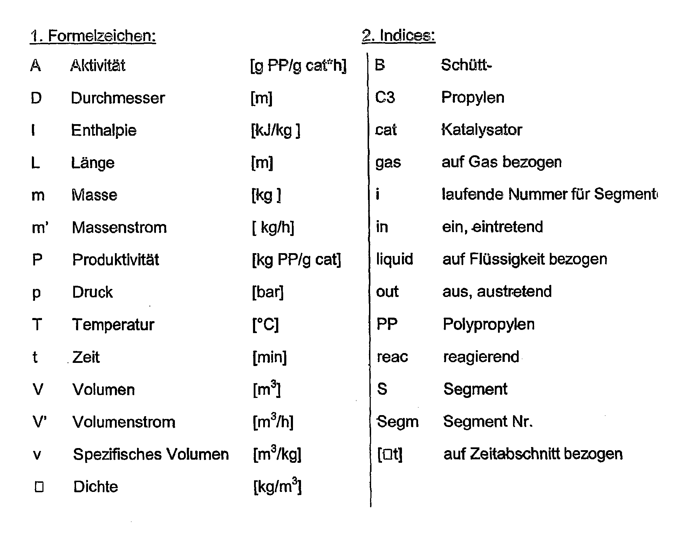

Gemäß dem vorstehenden Leistungsprofil wurde ein System entwickelt, das die folgenden Merkmale aufweist: Es handelt sich um einen vertikalen, gerührten Reaktor, der in Segmente (Gruppen) aufgeteilt ist. Für die Reaktionsführung ist es zunächst unerheblich ob der Haupt-Produktfluss nach oben oder nach unten erfolgt. Der Reaktor besteht aus mindestens jedoch 2 bevorzugt 4, besonders bevorzugt mehr als 12 theoretischen Segmenten wobei für das einzelne Segment folgende Betrachtung gilt (s. Abb. 7).

Die Gestaltung des Segments orientiert sich hauptsächlich an den Gasgeschwindigkeiten. Der Betriebspunkt des Reaktors liegt im Bereich zwischen der Gasgeschwindigkeit 0 und der Fluidierungsgrenze vorzugsweise im Bereich des 0.5 - 0.8 fachen der Gasgeschwindigkeit am Fluidisierungspunkt.

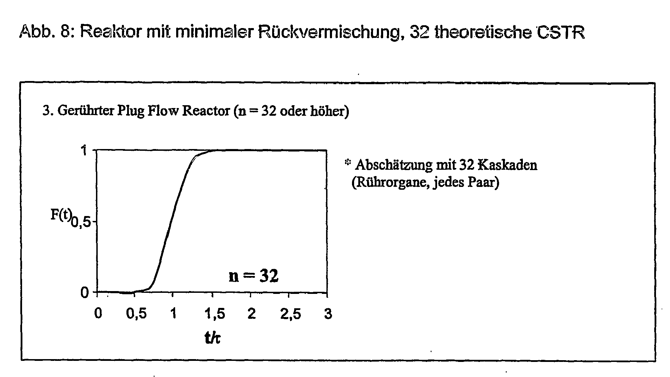

Das Verweilzeitverhalten eines solchen Reaktorsystems kann mit der Graphik (s. Abb. 8) hinsichtlich einer Produkteigenschaft F beschrieben werden.

Ein so geartetes Reaktorsystem ermöglicht Produktübergänge in weniger als einer Verweilzeit.

Jedes Segment ist mit einem Rührorgan ausgestattet, das eine effiziente horizontale Durchmischung ermöglicht und damit eine gleichmäßige Verteilung von Kühlmedium über den gesamten Reaktionsraum sowie eine hohe Relativgeschwindigkeit der Partikel zueinander gewährleistet. Rührorgane die ein solches Mischverhalten ermöglichen können wie oben gesagt z. B. die Form einer logarithmischen Spirale aufweisen wobei Querschnittsprofil und Ausgestaltung des Bereichs an den Rührerspitzen und der Rührerachse solcherart sind, dass der Massefluss auch in den Randzonen, d. h. im äußersten und innersten Arbeitsbereich des Rührers weitgehend gewährleistet bleibt. Ein besonderer Vorteil ist dabei, dass Rührer mit archimedischer oder logarithmischer Spiralform selbstreinigend sind.

Höhe und Durchmesser der Segmente können durch Wahl der Reaktorgeometrie und der Anordnung und Formgebung der Rührorgane an die jeweilige Kinetik des Katalysatorsystems angepasst werden.

Im Bereich der Einspülung des Katalysatorsystems kann zur besseren Einmischung des Katalysators und zur effektiveren Wärmeabfuhr eine rückvermischte Zone vorgesehen werden. In diesem Falle wird das Rührorgan entsprechend modifiziert. Geeignet sind zu diesem Zweck zum Beispiel Stromstörer oder andere Einbauten, die eine Vermischung in Richtung der Rührerachse erzwingen.

Als Kühlmedium zur Abführung der Reaktionswärme wird vorzugsweise flüssiges Monomer verwendet. Sofern sinnvoll können auch inerte Komponenten, die nicht am Reaktionsgeschehen teilnehmen eingesetzt werden. Im einfachsten Fall wird das Kühlmedium von unten in den Reaktor dosiert und oben abgezogen, unabhängig von der Hauptflussrichtung des Produktes. Es können ebenfalls einzelne Segmente mit separaten Dosierstellen für Kühlmedium und/oder weitere Reaktionskomponenten wie Monomere, Katalysatoren, Aktivatoren, Inhibitoren etc. versehen werden. Weiterhin besteht die Möglichkeit, durch Abzug von Kühlmedium oder Reaktionskomponenten innerhalb der Segmente die Gaszusammensetzung zu beeinflussen. Gleiches gilt für den Einsatz von Sperrmedien zwischen Segmenten zur Trennung von Gaszusammensetzungen innerhalb des Reaktors. Anhand der beiliegenden Figuren wird die vorliegende Erfindung näher erläutert. Dabei zeigen:
**Figur 1** das Fließverhalten im Vergleich zum Stand der Technik,
**Figur 2** den prinzipiellen Aufbau des erfindungsgemäßen Reaktors und
**Figur 3** die Spülung eines Polyolefins mit Inertgas
**Figur 4** Rührorgane

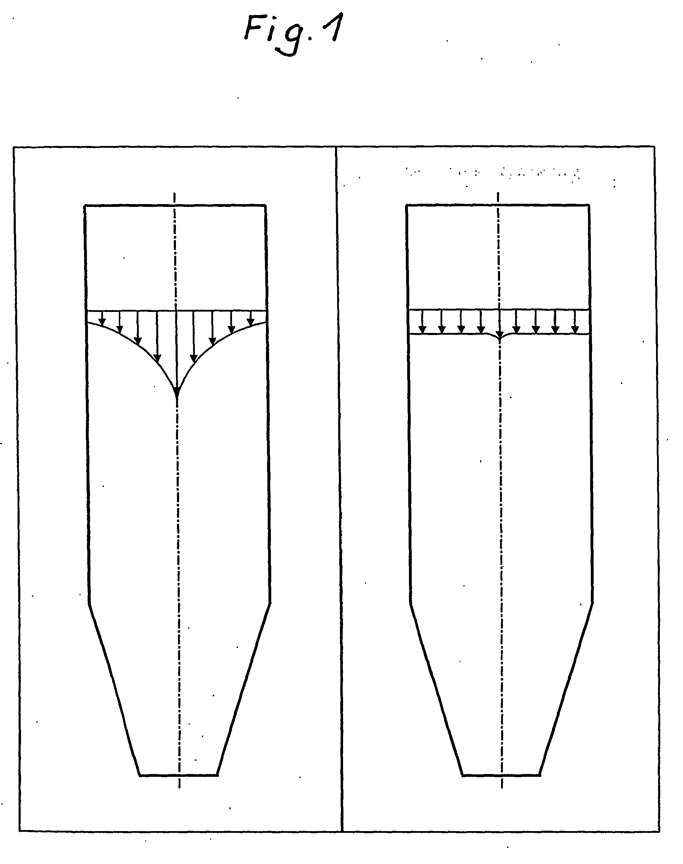

**Figur 1** zeigt links die Strömungscharakteristik eines fluiden Mediums beim Durchgang durch einen stehenden zylindrischen Behälter (1) mit herkömmlichen Zentralen, vertikalen Rührorganen, die auf einer angetriebenen koaxialen Welle angeordnet sind. Die Strömungsgeschwindigkeit nimmt hauptsächlich infolge der Randreibung von innen nach außen ab, so dass die zentralen Teilchen den Reaktor deutlich früher verlassen, als die im Randbereich befindlichen, d. h. die Verweilzeit ist sehr ungleich.

Die rechte Abbildung veranschaulicht den Effekt des erfindungsgemäßen Vorgehens. Die Strömungsgeschwindigkeit aller Teilchen ist gleich, sie passieren den Reaktor in geschlossener Front als Kolbenströmung, jedoch unter permanenter Vermischung quer zur Reaktorachse. Unter Berücksichtigung der Reaktionsgeschwindigkeit, des Wärmeübergangs und dergleichen lassen sich daher Zonen definieren, denen von außen oder über eine Hohlwelle weitere Reaktionskomponenten oder auch Reaktionshemmer zugegeben werden können, beispielsweise lassen sich so mehrstufige Reaktionen in einem einzigen Reaktorgehäuse durchführen oder auch unterschiedliche Reaktionsparameter wie Temperatur, Konzentration in einem Reaktorgehäuse variieren.

Die Verhältnisse gelten sowohl für die bevorzugte stehende, als auch eine liegende oder geneigte Anordnung des Reaktors.

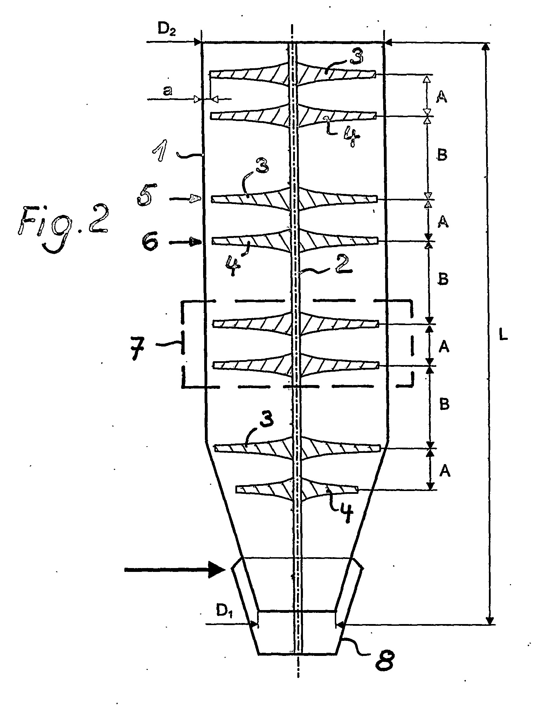

**Figur 2** veranschaulicht den prinzipiellen Aufbau des erfindungsgemäßen Reaktors.
Er besteht aus einem insbesondere stehenden zylindrischen Behälter 1 mit einer mittigen Welle 2, die auch hohl ausgebildet sein kann. Die Welle 2 trägt als Rührorgane 5, 6, Rührflügel 3, 4, welche jeweils zu übereinanderliegenden und miteinander wirkenden Gruppen 7 zusammengefasst sind, wobei die Flügel 3, 4, gegensinnig spiralig gekrümmt sind, so dass ein Rührorgan 5 eine im wesentlichen radial nach außen gerichtete Förderung und das andere 6 eine solche nach innen gerichtet bewirkt. Vorteilhafterweise sind dabei die Abstände A zwischen den Rührorganen 5, 6, geringer, als die Abstände B der Gruppen 7 voneinander. Das Spiel A zwischen den Rührflügeln 3, 4 und der Wandung des Behälters ist auf die den Reaktor durchwandernden Teilchengrößen abgestimmt, d. h. es kann bei anwachsenden Teilchengrößen in Strömungsrichtung zunehmen.

Um die Strömungsgeschwindigkeit am Auslauf des Reaktors zu erhöhen, kann dieser nahe dem Boden 8 konisch ausgebildet sein. Über eine Hohlwelle und entsprechende Austrittsöffnungen (nicht gezeigt) bzw. hohl ausgebildete Rührflügel können in den Prozess Substanzen eingeschleust oder auch aus diesem abgezogen werden.

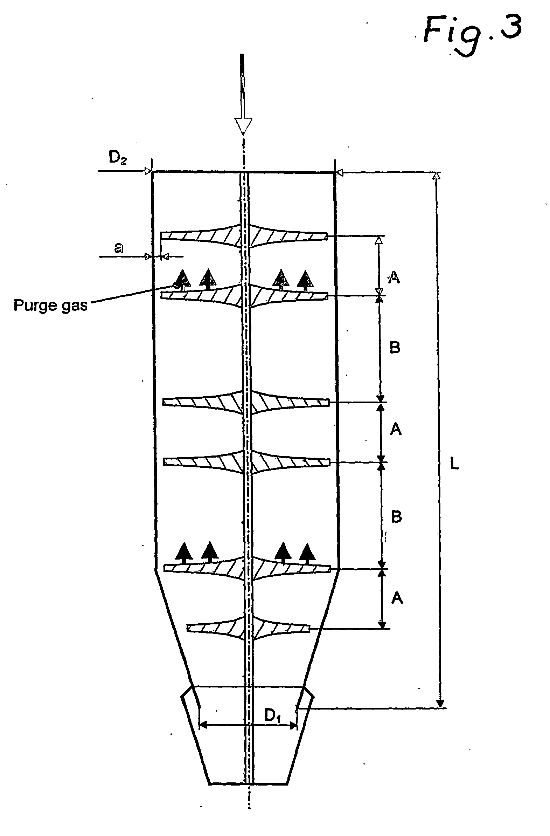

**Figur 3** zeigt eine weitere Anwendung des erfindungsgemäßen Reaktors.

Die durch die katalytische Reaktion in Figur 3 erhaltenen und mit dem Katalysator angewachsenen Polyolefinteilchen enthalten unreagierte Bestandteile an gasförmigem Monomer.

Dieses ist vor der Weiterverarbeitung zu entfernen. Dazu wird das Produkt (kontinuierlich) in einen zweiten, mit ähnlichen Rührflügelgruppen ausgestalteten Reaktor überführt und mit Inertgas bei leichtem Überdruck oder auch Atmosphärendruck unter intensivem Rühren gespült, wobei wiederum das dem Strömungsrohr entsprechenden Verweilzeitverhalten für eine absolut gleichmäßige Entgasung sorgt.

Das Inertgas (N₂) kann im Gegenstrom z.B. über den Boden eingeleitet werden, oder aber, wie vorliegend angedeutet über eine Hohlwelle und die Rührflügel.

Grundsätzlich ist es dabei oder auch anschließend möglich, dem Polymer Additive z.B. Farbstoffe zuzugeben, die wiederum sehr homogen mit dem Polymer vermischt werden.

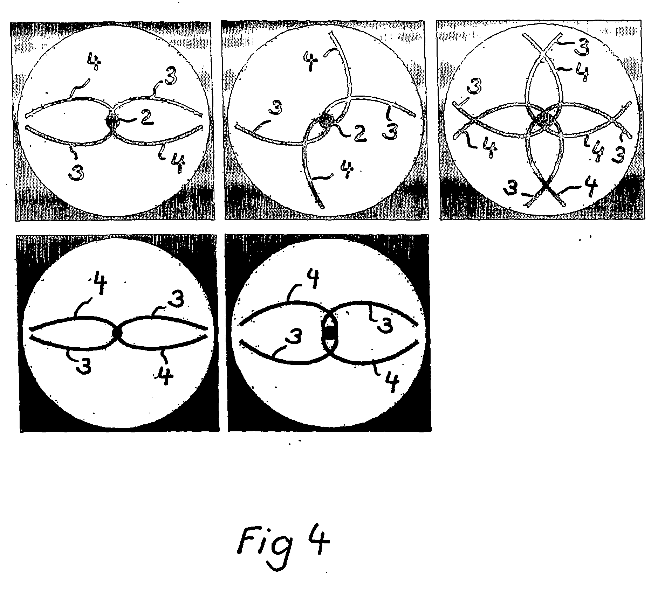

Figur 4 zeigt in der Draufsicht verschiedene Ausführungen der Rührorgane, wobei die gleichsinnig gekrümmtem Flügel 3 in einer anderen Ebene liegen, als die entgegengesetzt gekrümmten 4.

Vorzugsweise werden Rührflügelpaare eingesetzt, die auch kreuzweise angeordnet sein können. Je nach Rotationsgeschwindigkeit können die Krümmungen der Flügel stärker oder schwächer ausgeführt sein und eine zueinander versetzte Anordnung der Flügel innerhalb einer Gruppe in den benachbarten Ebenen ist ebenfalls möglich.

Das nachstehende Ausführungsbeispiel beschreibt die Herstellung von Polypropylen in einem Reaktor, z. B. gemäß Figur 2.

Die eingesetzten Rohstoffe sind die folgenden:
Propylen: Vorzugsweise Polymergrade mit einer Reinheit von > 99,8 %
Katalysator: Ziegler Katalysator der 4. Generation oder andere zur Herstellung von Polypropylen geeigneten Katalysatoren
Alkyl: vorzugsweise Triethylaluminium
Donor: Vorzugsweise ein Silan der Gruppe Dialkyldialkoxysilan der allgemeinen Formel RR'Si(OMe)2 mit R, R' gleich oder verschieden, R, R' = Alkyl, Isoalkyl, Aryl, Cycloalkyl...Im vorliegenden Beispiel wurde Cyclohexyl-methyl-dimethoxysilan verwendet.
Wasserstoff: Reinst.

In einen mit Polymerpulver einer mittleren Schüttdichte von 400 kg/m³ gefüllten, kontinuierlich betriebenen Reaktor (top down) mit einer Länge von 16,3 m und einem Anfangsdurchmesser D2 von 1,74 m sowie einem Enddurchmesser von 0,7 m und einem Nutzvolumen von 12 m³ wird der Katalysator kontinuierlich von oben auf das Rührbett dosiert. Der Katalysator ist in Propylen aufsuspendiert und wird als Suspension mit einer Konzentration von 10 % mittels Reinpropylen in einer Menge von 1 t/h in den Reaktor verbracht. Die Rührgeschwindigkeit beträgt 24 U/min. Gleichfalls von oben werden Triethylaluminium (Alkyl) in einer Menge von 250 g/t gesamt Frischpropylendosierung sowie Cyclohexylmethyldimethoxysilan (Donor) in einer Menge von 21 g/t gesamt Frischpropylendosierung eindosiert, so dass sich ein molares Verhältnis von Alkyl/Donor 20/1 einstellt. Weiteres Propylen wird entsprechend dem Verbrauch durch die Polymerisation druckgeregelt von unten in den Reaktor eingespeist. Der Reaktordruck wird durch diesen geregelten Monomerstrom bei 30 bar gehalten. Die Temperaturregelung erfolgt in der Art, dass pro Gruppe (Rührerpaar), z.B. seitlich entsprechend der gemessenen Temperatur flüssiges Propylen zur Kühlung eingespeist wird. Das gesamte zur Kühlung eingesetzte Propylen wird über den Reaktordeckel in einen Kühler verbracht, wo es kondensiert und mittels einer Pumpe wieder zu den einzelnen Dosierstellen verbracht wird. In den untersten Strom des Kühlgases wird Wasser stoff in einer Menge von 62 g/t eingesetztes Frischpropylen zudosiert. Wasserstoff dient als Regler für das Polymermolekulargewicht. Gleichfalls wird unten Frischpropylen in einer Menge von 5.1 t/h eindosiert. Der Abzug des gebildeten Polymeren erfolgt kontinuierlich über eine geeignete Austragsarmatur in der Art, dass der Füllstand des Reaktors konstant bleibt. Zur Messung des Füllstandes können übliche Methoden zur Füllsfiandmessung von Schüttgütern angewendet werden. Die mittlere Menge an ausgetragenem Polymer beträgt 4,8 t/h, entsprechend einer mittleren Verweilzeit des Polymeren von 1 h, das erhaltene Polymer hat die folgenden Eigenschaften:
MFI (Melt flow index): 12 g /10 min. (nach ASTM D 1238)
XL (Xylol löslicher Anteil): 2,2 % (nach ASTM D 5492)
Mittlere Schüttdichte: 440 g/l. (nach ASTM D 1895)

## Patentansprüche

1. Vorrichtung zur Durchführung von chemischen und physikalischen Prozessen, bei welchen fließfähige Substanzen miteinander vermischt werden, bestehend aus einem zylindrischen Behälter (1) mit Einlässen und Auslässen, sowie einer zentralen Welle (2) und an dieser angeordneten, sich zur Wandung erstreckenden, radialen Rührflügeln (3; 4) mit den folgenden Merkmalen:
a) die Rührflügel (3;4) sind in Umfangsrichtung gesehen gekrümmt ausgebildet und
b) als Rührorgane (5; 6) paarweise übereinander zu Gruppen (7) zusammengefasst, wobei
c) die Flügel (3) des einen Organs (5) der Gruppe (7) radial konkav und die Flügel (4) des anderen Organs (6) radial konvex gekrümmt sind, **dadurch gekennzeichnet, dass**
d) die Flügel (3; 4) sich zu ihren freien Enden hin verjüngen.

2. Vorrichtung nach Anspruch 1 oder 2 **dadurch gekennzeichnet, dass** die Krümmung der Flügel (3; 4) die Form einer Spirale aufweisen.

3. Vorrichtung nach Anspruch 1 oder 2, **dadurch gekennzeichnet, dass** die Krümmung logarithmisch oder archimedisch ist.

4. Vorrichtung nach einem der Ansprüche 1 bis 3, **dadurch gekennzeichnet, dass** die Flügel (3; 4) zur vertikalen Förderung in Axialrichtung der Substanzen in axialer Richtung angestellt sind.

5. Vorrichtung nach Anspruch 4, **dadurch gekennzeichnet, dass** die Flügel (3; 4) der Rührorgane gegensinnige Anstellwinkel aufweisen.

6. Vorrichtung nach einem der Ansprüche 1 bis 5, **dadurch gekennzeichnet, dass** zwischen den Gruppen von Rührorganen (5; 6) Sperrelemente angeordnet sind.

7. Vorrichtung nach einem der Ansprüche 1 bis 6, **dadurch gekennzeichnet, dass** in der Behälterwandung beabstandete Ein- und Auslässe zur Zufuhr von Reaktionskomponenten und/oder Kühlmitteln in die fließfähigen Substanzen angeordnet sind.

8. Verfahren zur Herstellung von Polymeren in einem rohrförmigen Reaktor, wobei man die Reaktionskomponenten in axialer Richtung durch den Reaktor bewegt und dabei von paarweise übereinander zu Gruppen zusammengefassten gegensinnig gekrümmten Rührflügeln im wesentlichen senkrecht zur Reaktorachse einmal zu dieser und einmal von dieser weg fördert und dabei die Reaktionskomponenten intensiv vermischt, **dadurch gekennzeichnet, dass** sich die Flügel zu ihren Enden hin verjüngen.

9. Verfahren nach Anspruch 8, **dadurch gekennzeichnet, dass** man im Reaktor ein Olefinpolymer vorlegt und zu diesem Monomer und Katalysatorsystem hinzufügt.

10. Verfahren nach Anspruch 9, **dadurch gekennzeichnet, dass** der Reaktorinhalt durch Zugabe eines flüssigen Monomers kühlt, dabei das Monomer verdampft und dieses gasförmig abgezogen wird.

11. Verfahren nach einem der Ansprüche 8 bis 10, **dadurch gekennzeichnet, dass** man das flüssige Monomer an mehreren Stellen in Förderrichtung des Polymers gesehen hintereinanderliegend in den Reaktor eingibt.

12. Verfahren nach einem der Ansprüche 9 bis 11, **dadurch gekennzeichnet, dass** man abschnittsweise in den Reaktor von außen oder über eine die Rührflügel tragende Hohlwelle oder über die Flügel ein Sperrgas einführt und dieses radial abzieht.

13. Verfahren nach einem der Ansprüche 9 bis 12, **dadurch gekennzeichnet, dass** man das den Reaktor verlassende Produkt in einen zweiten Reaktor mit ähnlichen Rührflügelpaaren überführt und in diesem durch Spülung mit einem Inertgas, vorzugsweise Stickstoff von Restmonomeren befreit.

## Claims

1. Apparatus for performing chemical and physical processes, wherein flowable substances are mixed together, comprising a preferably (vertical) cylindrical vessel (1) with inlets and outlets, as well as a central shaft (2) and radial agitator blades (3; 4) arranged on the said shaft, extending close to the wall, **characterised by** the following features:
a) the agitator blades (3; 4) are designed in a curved manner when viewed in the peripheral direction and
b) are combined in pairs of agitator elements (5; 6), positioned one above the other, to form groups (7),
c) the blades (3) of one element (5) of the group (7) being curved in a radially concave manner and the blades (4) of the other element (6) being curved in a radially convex manner **characterised in that**
d) the blades (3; 4) are tapered towards their free ends.

2. Apparatus according to claim 1 or 2, **characterised in that** the curvature of the blades (3; 4) is spiral-shaped.

3. Apparatus according to claim 1 or 2, **characterised in that** the curvature is logarithmic or Archimedean.

4. Apparatus according to any one of claims 1 to 3, **characterised in that** the blades (3; 4) are pitched in the axial direction for vertical feeding of substances in the axial direction.

5. Apparatus according to claim 4, **characterised in that** the blades (3; 4) of the agitator elements have pitching angles in opposite directions.

6. Apparatus according to any one of claims 1 to 5, **characterised in that** barrier elements are provided between the groups of agitator elements.

7. Apparatus according to any one of claims 1 to 6, **characterised in that** in the vessel wall spaced apart inlets and outlets are provided for feeding reaction components and/or coolants to the flowable substances.

8. Process for preparing polymers in a tubular reactor, the reaction components being moved through the reactor in an axial direction and in the course thereof being conveyed alternatingly towards and away from the reactor axis by pairs of agitator blades, curved in opposite directions, combined to form groups one above the other, substantially normal to the reactor axis, thereby intensely mixing the reaction components, **characterised in that** the blades are being tapered towards their ends.

9. Process according to claim 8, **characterised in that** an olefin polymer is placed into the reactor and a monomer and a catalyst system are added to the latter.

10. Process according to claim 9, **characterised in that** the reactor content is cooled by adding a liquid monomer, the monomer evaporating in the course thereof and being withdrawn as a gaseous substance.

11. Process according to any one of claims 8 to 10, **characterised in that** the liquid monomer is fed to the reactor successively at a plurality of locations, viewed in the direction of conveyance of the polymer.

12. Process according to any one of claims 9 to 11, **characterised in that** from the outside or via a hollow shaft supporting the agitating blades or via the blades a barrier gas is introduced in sections into the reactor and radially withdrawn from the latter.

13. Process according to any one of claims 9 to 12, **characterised in that** the product exiting from the reactor is passed into a second reactor comprising similar pairs of agitator blades and wherein it is freed of residual monomers by scrubbing with an inert gas, preferably nitrogen.

## Revendications

1. Dispositif pour mettre en oeuvre des processus chimiques et physiques, dans lequel on mélange entre elles des substances fluides, et constitué d'un récipient cylindrique (1) avec admission et évacuation, ainsi que d'un arbre central (2) qui y est fixé, des ailettes d'agitation radiales (3 ; 4) s'étendant jusqu'à la paroi avec les caractéristiques suivantes :
a) les ailettes d'agitation (3 ; 4) sont formées de façon courbée dans la direction de la périphérie et
b) sont réunies par paires les unes au-dessus des autres en organes d'agitation (5 ; 6), formant des groupes (7), où
c) les ailettes (3) d'un organe (5) du groupe (7) sont recourbées radialement de façon concave et les ailettes (4) de l'autre organe (6) sont recourbées radialement de façon convexe,
**caractérisé en ce que**
d) les ailettes (3 ; 4) s'amincissent vers leurs extrémités libres.

2. Dispositif selon la revendication 1 ou 2, **caractérisé en ce que** la courbure des ailettes (3 ; 4) présente la forme d'une spirale.

3. Dispositif selon la revendication 1 ou 2, **caractérisé en ce que** la courbure est de forme logarithmique ou en vis d'Archimède.

4. Dispositif selon l'une des revendications 1 à 3, **caractérisé en ce que** les ailettes (3 ; 4) sont disposées dans le sens axial en vue du transport vertical des substances dans le sens axial.

5. Dispositif selon la revendication 4, **caractérisé en ce que** les ailettes (3 ; 4) des organes d'agitation présentent des angles de marche en sens contraire.

6. Dispositif selon l'une des revendications 1 à 5, **caractérisé en ce que** des éléments de barrage sont disposés entre les groupes d'organes d'agitation (5 ; 6).

7. Dispositif selon l'une des revendications 1 à 6, **caractérisé en ce que** des admissions et évacuations sont disposées selon un certain intervalle dans la paroi du récipient en vue de l'apport de composants de la réaction et/ou de réfrigérants dans les substances fluides.

8. Dispositif de production de polymères dans un réacteur tubulaire, dans lequel on déplace les composants de la réaction en direction axiale à travers le réacteur, et on les y fait se déplacer au moyen d'ailettes d'agitation recourbées en sens contraire et assemblées par paires les unes au-dessus des autres pour constituer des groupes, ce déplacement s'effectuant de manière essentiellement perpendiculaire à l'axe du réacteur, une fois dans sa direction et une fois en direction opposée, et l'on mélange les composants de la réaction de façon intensive, **caractérisé en ce que** les ailettes s'amincissent en direction de leur extrémité.

9. Procédé selon la revendication 8, **caractérisé en ce qu'**on dispose dans le réacteur un polymère d'oléfine et **en ce qu'**on y ajoute un monomère et un système catalyseur.

10. Procédé selon la revendication 9, **caractérisé en ce qu'**on refroidit le contenu du réacteur en ajoutant un monomère liquide, **en ce que** dans l'opération on fait évaporer le monomère et **en ce qu'**on retire celui-ci sous forme gazeuse.

11. Procédé selon l'une des revendications 8 à 1 0, **caractérisé en ce qu**'on introduit le monomère liquide en plusieurs endroits successivement dans le réacteur dans la direction de déplacement du polymère.

12. Procédé selon l'une des revendications 9 à 1 1, **caractérisé en ce qu'**on introduit un gaz barrière par sections dans le réacteur depuis l'extérieur ou depuis un arbre creux portant les ailettes d'agitation ou par les ailettes, et **en ce qu'**on retire ce gaz de façon radiale.

13. Procédé selon l'une des revendications 9 à 12, **caractérisé en ce qu**'on transfère le produit qui quitte le réacteur dans un second réacteur muni de paires d'ailettes d'agitation analogues, et en ce qu'on débarrasse ce second réacteur des résidus de monomère en balayant avec un gaz inerte, de préférence l'azote.
